# EUROPÄISCHE PATENTSCHRIFT

(11) **EP 2 811 182 B1**
(45) Veröffentlichungstag und Bekanntmachung des Hinweises auf die Patenterteilung: **12.04.2017**
(21) Anmeldenummer: 14171358.6
(22) Anmeldetag: 05.06.2014
(51) Int. Cl.: F16B 25/00, F16B 25/10

(54) **Schraube zum Bohren und Gewindeschneiden in einem ersten Untergrundabschnitt und einem härteren zweiten Untergrundabschnitt**
Screw for drilling and tapping in a first supporting surface section and a harder second supporting surface section
Vis de forage et vis-taraud dans une première section de sous-sol et une seconde section de sous-sol plus dure

(30) Priorität: 06.06.2013 DE 102013210578
(43) Veröffentlichungstag der Anmeldung: 10.12.2014
(73) Patentinhaber: Adolf Würth GmbH & Co. KG, 74653 Künzelsau (DE); Würth International AG, 7004 Chur (CH)
(72) Erfinder: Humm, Siegfried, 74214 Schöntal (DE); Eckert, Rainer, 97990 Weikersheim (DE); Wunderlich, Andreas, 74635 Kupferzell (DE)
(74) Vertreter: Dilg, Haeusler, Schindelmann Patentanwaltsgesellschaft mbH

(56) Entgegenhaltungen:
- EP-A1- 1 152 157
- DE-A1- 3 424 911
- US-A- 3 665 801

## Beschreibung

Die Erfindung betrifft eine Montageanordnung, ein Verfahren zum Montieren eines ersten Untergrundabschnitts und eines härteren zweiten Untergrundabschnitts aneinander mittels einer Schraube, ein Verfahren zum Herstellen einer Schraube und eine Verwendung.

Eine Schraube ist ein Bolzen mit einem Antrieb, der außen mit einem Gewinde versehen ist. Bei Schrauben mit Kopf dient die Ringfläche unter dem Kopf als Anschlag gegen das mit ihm zu befestigende gelochte Teil. Der Kopf enthält auch einen Antrieb zum formschlüssigen Kontakt mit Werkzeugen für das Drehen der Schraube, wie zum Beispiel einen Schlitz oder einen Sechskant.

Die Firma Würth vertreibt eine selbstbohrende Schraube mit der Bezeichnung Flügel-PIAS ®, die zum Befestigen von Holz auf Metallunterkonstruktionen verwendet werden kann.

EP 0,988,427 B1 offenbart ein Verbindungselement mit einem im wesentlichen stabförmigen Schaft zum Einsatz bei Verbindungen von wenigstens zwei Holzbauteilen und mindestens einer in einen oder mehrere Schlitze der Holzbauteile einsetzbaren, aus Metall bestehenden Knotenplatte. Der stabförmige Schaft weist zumindest an seinem einen Ende eine Bohrspitze zum Eindringen in die Knotenplatte und in das Holzbauteil und an seinem anderen Ende einen Werkzeugangriff für einen Drehantrieb auf. Der Durchmesser des Schaftes entspricht wenigstens über einen oder mehrere Teilbereiche seiner Länge zumindest annähernd dem Bohrerdurchmesser des Bohrteils. An dem dem Bohrteil gegenüberliegenden Ende des Schaftes sind Mittel zur axialen Verschiebesicherung in eingesetzten Zustand ausgebildet.

EP 0,988,427 B1 offenbart ferner, dass eine Reihe von Bohrschrauben bekannt sind, welche eine Bohrspitze und einen Schaft mit einem Gewinde aufweisen. Bei derartigen Bohrschrauben ist immer ein entsprechend langes Gewinde vorhanden und stets vorgesehen, dass der Bohrdurchmesser größer ist als der Kerndurchmesser des Schaftes im Gewindebereich. Es wird ausgeführt, dass derartige Bohrschrauben jedoch für den gemäß EP 0,988,427 B1 vorgesehenen Zweck ganz allgemein ungeeignet seien, da bereits beim Bohrvorgang ein Vorschub entsprechend der Gewindesteigung vorhanden wäre. Gerade dieser sei aber beim Durchbohren relativ dicker Knotenplatten hinderlich, da der Vorschub nicht mit der Bohrgeschwindigkeit in der Knotenplatte in Einklang bringbar sei.

Das Verbindungselement gemäß EP 0,988,427 B1 ist nur mit relativ hohem Kraft- und Zeitaufwand betreibbar. Eine Demontage des gesetzten Verbindungselements ist nicht oder allenfalls sehr schwer möglich. Ferner ist die Querzugfestigkeit verbesserungsbedürftig, und es erfolgt eine große Wärmebildung.

DE 30 43 478 A1 offenbart eine selbstbohrende Schraube zum Befestigen von Fassadenplatten auf einer Untergrundkonstruktion. Die Schraube hat einen Schraubenkopf mit einem Kreuzschlitz, ein doppelgängiges selbstbohrendes Gewinde und einen Fräsabschnitt zum Ausbohren einer Bohrung aus einer Fassadenplatte. Bei der Schraube ist unmittelbar hinter der Schraubenspitze ein Bogenabschnitt des einen Gewindegangs des doppelgängigen Gewindes weggelassen, d.h. nur der eine Gewindegang beginnt unmittelbar nach der Spitze.

DE 198 40 298 A1 offenbart eine Bohrschraube mit einem von einem Kopf begrenzten Schaft, der mit einem Außengewinde versehen ist. Am kopffernen Ende besitzt der Schaft eine Bohrspitze. Deren Schneiden machen es möglich, dass sich die Schraube beim Einschrauben in ein Werkstück ohne Loch ihr Loch selbst bohrt. In diesem selbstgebohrten Loch formt die Schraube dann mit einem der Bohrspitze nahen Abschnitt des Außengewindes auf dem Schaft selbst ein Gegengewinde. DE 198 40 298 A1 offenbart ferner eine selbstgewindeformende Schraube mit einem von einem Kopf begrenzten Schaft mit einer Bohrspitze am kopffernen Schaftende. Zusätzlich ist ein fließlochformender Schaftabschnitt zwischen der Bohrspitze und dem mit einem Außengewinde versehenen Schaft vorhanden. Beim Einschrauben der Schraube in ein Werkstück ohne Loch bohrt sich die Schraube mit der Bohrspitze zunächst ein Loch, welches dann von dem fließlochformenden Schaftabschnitt unter Bildung eines Wulsts erweitert wird. Im Verlaufe des weiteren Einschraubens der Schraube formt diese sowohl im Bohrloch als auch in dem Wulst ein zum Außengewinde der Schraube kompatibles Innengewinde.

US 6,558,097 B2 offenbart einen Schraubbefestiger mit einer Spitze, die es erlaubt, durch ein Plattenmaterial und einen Stützkörper zu bohren, die mittels des Schraubbefestigers aneinander befestigt werden sollen. Ein Kopf des Schraubbefestigers hat eine Grenzfläche, in der geeignete Mittel zum Zusammenwirken mit einem Schraubendreher gebildet sind. Ein Gewindeschaft hat ein selbstschneidendes Gewinde. Die Spitze hat einen sehr kleinen Außendurchmesser und kann allenfalls ein sehr dünnes Blech durchdringen Dagegen würde die Spitze beim Eindringen in dickere Metallbauteile jedoch überhitzt und zerstört. Generell erlaubt die Form des Schraubbefestigers gemäß US 6,558,097 B2 kein Eindringen in dickere Metallbauteile.

US 3,665,801 A1 offenbart eine Flügelschraube mit Flügeln zwischen einer Bohrspitze und einem Gewindeschaft.

Es ist eine Aufgabe der vorliegenden Erfindung, die Verbindung zweier unterschiedlich harter Untergrundabschnitte stabil und einfach zu ermöglichen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Schraube zum Einbringen in einem Untergrund aus einem ersten Untergrundabschnitt und einem zumindest teilweise dahinter angeordneten härteren zweiten Untergrundabschnitt geschaffen, wobei die Schraube eine vorderseitige Bohrspitze zum zumindest teilweisen Durchbohren des ersten Untergrundabschnitts und des zweiten Untergrundabschnitts (insbesondere kann der erste Untergrundabschnitt vollständig und kann der zweite Untergrundabschnitt vollständig oder teilweise von der Schraube durchbohrt werden), einen rückseitigen Schraubenkopf mit einem Antrieb zum Drehantreiben der Schraube, und einen Schaftabschnitt zwischen der Bohrspitze und dem Schraubenkopf mit einem sich an den Schraubenkopf (direkt, d.h. ohne dazwischen angeordnete weitere Komponente, oder indirekt, d.h. mit dazwischen angeordneter weiterer Komponente) anschließenden, in dem ersten Untergrundabschnitt selbstschneidenden und in dem zweiten Untergrundabschnitt selbstschneidenden Gewindeabschnitt und mit einem sich an die Bohrspitze direkt (d.h. ohne dazwischen angeordnete weitere Komponente) anschließenden gewindefreien, sich vorderseitig (d.h. ausgehend von dem Gewindeabschnitt zu der Bohrspitze hin) verjüngenden (insbesondere kontinuierlich verjüngenden) Verjüngungsabschnitt aufweist, wobei sich der Verjüngungsabschnitt direkt (d.h. ohne dazwischen angeordnete weitere Komponente bzw. ohne dazwischen angeordneten weiteren Abschnitt) an den Gewindeabschnitt anschließt.

Gemäß einem weiteren Ausführungsbeispiel der vorliegenden Erfindung ist eine Montageanordnung bereitgestellt, die einen ersten Untergrundabschnitt, einen zumindest teilweise hinter dem ersten Untergrundabschnitt anzuordnenden und daran zu montierenden härteren zweiten Untergrundabschnitt, und eine Schraube mit den oben beschriebenen Merkmalen zum Einbringen in den ersten Untergrundabschnitt und den zweiten Untergrundabschnitt aufweist, um den ersten Untergrundabschnitt an dem zweiten Untergrundabschnitt zu montieren.

Gemäß einem weiteren Ausführungsbeispiel der vorliegenden Erfindung ist ein Verfahren zum Montieren eines ersten Untergrundabschnitts und eines härteren zweiten Untergrundabschnitts aneinander mittels einer oben beschriebenen Schraube bereitgestellt, wobei bei dem Verfahren zumindest ein Teil des zweiten Untergrundabschnitts hinter dem ersten Untergrundabschnitt angeordnet wird, die Schraube mittels Drehbetätigens eines Antriebs an einem rückseitigen Schraubenkopf drehangetrieben wird, der erste Untergrundabschnitt und der zweite Untergrundabschnitt mit einer vorderseitigen Bohrspitze der Schraube zumindest teilweise durchbohrt werden, ein Gewinde auf der Schraube in dem ersten Untergrundabschnitt und in dem zweiten Untergrundabschnitt mit einem sich an den Schraubenkopf direkt oder indirekt anschließenden selbstschneidenden Gewindeabschnitt (insbesondere einen in Holz und in Aluminium selbstschneidenden Gewindeabschnitt) der Schraube geschnitten wird, und mittels der Schraube bearbeitetes (insbesondere geschnittenes, gebohrtes und/oder verdrängtes) Material des ersten Untergrundabschnitts und/oder des zweiten Untergrundabschnitts an einem sich an die Bohrspitze direkt anschließenden gewindefreien, sich zu der Bohrspitze hin verjüngenden Verjüngungsabschnitt der Schraube zumindest zeitweise aufgenommen wird, wobei sich der Verjüngungsabschnitt direkt an den Gewindeabschnitt anschließt.

Gemäß einem anderen exemplarischen Ausführungsbeispiel wird ein Verfahren zum Herstellen einer Schraube zum Einbringen in einem Untergrund aus einem ersten Untergrundabschnitt und einem zumindest teilweise dahinter angeordneten härteren zweiten Untergrundabschnitt bereitgestellt, wobei bei dem Verfahren eine vorderseitige Bohrspitze zum zumindest teilweisen Durchbohren des ersten Untergrundabschnitts und des zweiten Untergrundabschnitts ausgebildet wird, ein rückseitiger Schraubenkopf mit einem Antrieb zum Drehantreiben der Schraube ausgebildet wird, und ein Schaftabschnitt zwischen der Bohrspitze und dem Schraubenkopf mit einem sich an den Schraubenkopf direkt oder indirekt anschließenden, in dem ersten Untergrundabschnitt und in dem zweiten Untergrundabschnitt selbstschneidenden Gewindeabschnitt und mit einem sich an die Bohrspitze anschließenden gewindefreien, sich vorderseitig verjüngenden Verjüngungsabschnitt ausgebildet wird, wobei sich der Verjüngungsabschnitt direkt an den Gewindeabschnitt anschließt.

Gemäß einem weiteren exemplarischen Ausführungsbeispiel wird eine Schraube mit den oben beschriebenen Merkmalen zum Befestigen eines ersten Untergrundabschnitts aus Holz an einem zweiten Untergrundabschnitt aus einem Weichmetall verwendet.

Gemäß einem exemplarischen Ausführungsbeispiel wird eine Schraube geschaffen, deren vorderseitiger Abschnitt sich (wahlweise mit oder ohne Vorbohrung) auch durch ein hartes Material wie Aluminium bohren kann, während der gewindeschneidende Abschnitt dahinter (wahlweise mit oder ohne Vorbohrung) selbstschneidend ein Gewinde in dem harten Material und in einem weicheren Material, wie zum Beispiel Holz, formen kann. Die Montage eines mechanisch weicheren Untergrundabschnitts an einem mechanisch härteren Untergrundabschnitt ist somit mit einem verringerten Kraft- und Zeitaufwand sowie mit einer verringerten Wärmebildung möglich. Eine Demontage von Einzelkomponenten der verbundenen Anordnung ist möglich. Ferner ist eine hohe Querzugfestigkeit erreichbar.

Durch das Vorsehen des Verjüngungsabschnitts ist eine wirksame Abführung von Span und/oder Bohrmehl, der/das beim Schneiden von zum Beispiel metallischem oder holzartigem Material durch die Bohrspitze anfällt, möglich. Es hat sich ferner gezeigt, dass das Vorsehen des Verjüngungsabschnitts auch den Abtransport der Späne bzw. des Mehls aus einem Zwischenraum zwischen der Schraube und dem zu bohrenden Untergrund fördert.

Eine Schraube gemäß einem exemplarischen Ausführungsbeispiel hat eine Bohrspitze und einen Verjüngungsabschnitt nach bzw. direkt hinter der Bohrspitze. Ein Gewindeabschnitt erstreckt sich bohrspitzenseitig unmittelbar von dem Verjüngungsabschnitt ausgehend, und kann schraubenkopfseitig bedarfsweise auch in einem Abstand von dem Schraubenkopf vorgesehen sein bzw. bis dahin reichen (zum Beispiel um die Schraubendimension an die Dicke des Untergrunds bzw. der Untergrundabschnitte anzupassen). Der Gewindeabschnitt soll in beiden Untergrundabschnitten (vorzugsweise also in einem Weichmetall wie Aluminium und in einem demgegenüber noch weicheren Material, wie zum Beispiel Holz) gewindeschneidend sein. Dadurch kann eine hohe Tragkraft der Schraube erreicht werden. In dem zweiten Untergrundabschnitt, insbesondere aus Aluminium, soll der Gewindeabschnitt gewindeschneidend sein, um dort eine Fixierung bzw. ein Eingreifen zu bewerkstelligen und Druck gegen den Schraubenkopf aufzubauen, d.h. den ersten Untergrundabschnitt und den zweiten Untergrundabschnitt aneinander drücken. In dem ersten Untergrundabschnitt, insbesondere aus Holz, soll der Gewindeabschnitt gewindeschneidend sein, um dort eine Fixierung zu bewerkstelligen, Vorschub für die Schraube zu erzeugen und damit Druck für den Bohrvorgang durch den härteren zweiten Untergrundabschnitt aufzubauen. Demzufolge ist es auch vorteilhaft, wenn eine Schraube gemäß einem exemplarischen Ausführungsbeispiel den Schaftabschnitt zwischen der Bohrspitze und dem Schraubenkopf, ein in beiden Untergrundabschnitten selbstschneidendes Gewinde auf dem Schaftabschnitt, das annähernd von der Bohrspitze ausgeht, und einen Verjüngungsabschnitt zwischen der Bohrspitze und dem Gewindeabschnitt aufweist.

Im Weiteren werden zusätzliche exemplarische Ausführungsbeispiele der Schraube, der Montageanordnung, der Verfahren und der Verwendung beschrieben.

Gemäß der Erfindung ist der Gewindeabschnitt der Schraube derart konfiguriert, dass beim Gewindeschneiden in dem ersten Untergrundabschnitt die Schraube mit Zwangsvorschub in dem ersten Untergrundabschnitt und in dem zweiten Untergrundabschnitt vorwärts getrieben wird. Wenn der erste Untergrundabschnitt aus Holz und der zweite Untergrundabschnitt aus Aluminium ausgebildet ist, bohrt sich die Bohrspitze zum Beispiel zunächst durch einen ersten Abschnitt des ersten Untergrundabschnitts, nachfolgend durch den festeren zweiten Untergrundabschnitt, und dann zum Beispiel durch einen zweiten Abschnitt des ersten Untergrundabschnitts. Dabei bildet der zweite Abschnitt (d.h. ein dem Schraubenkopf abgewandter Abschnitt) des ersten Untergrundabschnitts anschaulich eine Art Widerlager und erzeugt einen Gegendruck auf die Bohrspitze. Da zu diesem Zeitpunkt der Gewindeabschnitt in dem ersten Untergrundabschnitt gerade ein Gewinde schneidet oder zumindest zum Teil bereits geschnitten hat, wird durch die drehende Vorwärtsbewegung des Gewindeabschnitts in dem bereits im ersten Untergrundabschnitt geschnittenen Gewinde ein Vorschub erzeugt. Dieser Vorschub schiebt die Bohrspitze der Schraube ohne oder praktisch ohne Zusatzkraft in den zweiten Untergrundabschnitt hinein. Dies ermöglicht ein kraftarmes Einbringen der Schraube in die beiden Untergrundabschnitte. Um unter Ausnützen eines Zwangsvorschubs die Schraube in die beiden Untergrundabschnitte unterschiedlicher Härte einbringen zu können, ist die entsprechende Schraube entsprechend zu konfigurieren, insbesondere sind die Bohrspitze und das Gewinde so aufeinander anzupassen, dass es zu einem Zwangsvorschub kommt, der ein synchrones Eindringen und Durchdringen der Bohrspitze in beide Untergrundabschnitte ermöglicht, das heißt, dass die Schraube in dem Maß bzw. mit dem Fortschritt in den zweiten Untergrundabschnitt (beispielsweise in das Aluminium) eindringt, mit dem sie aus dem ersten Untergrundabschnitt (beispielsweise Holz) austritt. Ein Auseinanderdrücken der beiden Untergrundabschnitte erfolgt gegebenenfalls nur beim Ansetzen der Schraube auf den zweiten Untergrundabschnitt für einen kurzen Moment. Sobald die Bohrspitze in dem zweiten Untergrundabschnitt gefasst hat, erfolgt das synchrone Eindringen in und Durchdringen der beiden Untergrundabschnitte. Hierfür kann zum Beispiel die Flankenhöhe des Gewindeabschnitts ausreichend groß gewählt werden, so dass ein ausreichend großer Anpressdruck auf den zweiten Untergrundabschnitt ausgeübt wird. Auch kann die Gewindeart entsprechend gewählt werden, wobei sich herausgestellt hat, dass ein UNC Gewinde besonders vorteilhafte Eigenschaften hinsichtlich des Bewirkens eines Zwangsvorschubs hat. Grundsätzlich kann eine derartige Schraube aber ganz unterschiedliche Gewindearten und ganz unterschiedliche Arten von Bohrspitzen aufweisen, solange deren (insbesondere geometrische) Anpassung aufeinander die Zwangsvorschubbedingung erfüllt. Insbesondere sollte das Gewinde so ausgestaltet werden, dass der Bohrvorschub nicht zu groß wird, so dass die Bohrspitze ausreichend Zeit hat, durch den zweiten Untergrundabschnitt (zum Beispiel aus Aluminium) zu bohren, um das Entstehen hoher Kraftspitzen in der Bohrspitze zu vermeiden.

Gemäß einem Ausführungsbeispiel kann die Schraube derart ausgebildet sein, dass eine Vorschubgeschwindigkeit auf eine Bohrgeschwindigkeit angepasst ist, wobei die Zwangsvorschubgeschwindigkeit die Geschwindigkeit ist, mit welcher die Schraube durch das selbstgeschnittene Gewinde zwangsläufig durch den ersten Untergrundabschnitt vorwärts getrieben wird, und wobei die Bohrgeschwindigkeit jene Geschwindigkeit ist, mit welcher die Bohrspitze in den zweiten Untergrundabschnitt eindringt. Insbesondere kann die Schraube so konfiguriert sein, dass die Zwangsvorschubgeschwindigkeit gleich oder im Wesentlichen gleich der Bohrgeschwindigkeit ist.

Gemäß einem Ausführungsbeispiel kann ein Verhältnis zwischen einem Außendurchmesser der Bohrspitze und einem Außendurchmesser des Gewindeabschnitts in einem Bereich zwischen ungefähr 0,8 und ungefähr 0,95 liegen, wobei technisch bedingte Toleranzen zu gewissen Abweichungen hiervon führen können. Einerseits sollte der Außendurchmesser der Bohrspitze kleiner als der Außendurchmesser des Gewindeabschnitts sein, um es dem Gewindeabschnitt noch zu ermöglichen, in dem dann nicht zu großen Bohrloch ein Gewinde schneiden zu können. Gleichzeitig sollte der Außendurchmesser der Bohrspitze groß genug sein, um beim Eindringen des Gewindes in den härteren zweiten Untergrundabschnitt (insbesondere aus Aluminium) das Gewinde noch furchen zu können und um die Schraube davor zu schützen, infolge mechanischer Überbelastung zu brechen. Ferner ist in dem genannten Größenbereich des Verhältnisses der beiden Außendurchmesser in der Praxis vorteilhaft ein Zwangsvorschub erreichbar.

Bevorzugt kann die Schraube gemäß einem exemplarischen Ausführungsbeispiel so konfiguriert sein, dass sie bei einer Anpresskraft auf einen der Untergrundabschnitte (zum Beispiel im Bereich eines Astlochs), die einen vorgegebenen Schwellwert überschreitet, ihre Vorwärtsbewegung hinein in die Untergrundabschnitte zu beenden (so dass dann das Gewinde im ersten Untergrundabschnitt, zum Beispiel aus Holz, überdreht) anstatt zu brechen. In diesem Fall dreht bei Überschreitung der genannten Maximalbelastung der Gewindeabschnitt in dem bereits geschnittenen Gewinde durch, die Schraube bricht aber nicht. Anschaulich fungiert die Schraube dann ähnlich einer Rutschkupplung. Anstelle eines an einer Baustelle besonders unerwünschten Bauteilversagens in Form des Abbrechens einer Schraube im Inneren der Untergrundabschnitte kommt es dann zu einem bloßen Durchdrehen, und die Schraube kann aus den Untergrundabschnitten wieder entfernt werden.

Wie bereits oben dargestellt, kann die Schraube vorteilhaft als Bohrstabdübel eingesetzt werden, um zwei unterschiedlich harte Untergrundabschnitte aneinander - selbst ohne Vorbohren - zu befestigen. Es ist aber zu betonen, dass die Schraube auch für viele andere Anwendungen verwendet werden kann, bei denen schraubenvorderseitig Material geschnitten und schraubenrückseitig ein Gewinde gebildet werden soll. Zum Beispiel kann die Schraube auch in einen einzigen, homogenen oder inhomogenen Untergrund eingeführt werden.

Gemäß einem Ausführungsbeispiel kann die Bohrspitze mindestens eine Bohrschneide aufweisen. Insbesondere können zwei Seitenbohrschneiden auf einer Mantelfläche eines zum Beispiel kegelförmigen endseitigen Bohrabschnitts liegen. In einer Seitenansicht kann ein Winkel, den die beiden Bohrschneiden miteinander einschließen, in einem Bereich zwischen 90° und 150° liegen, insbesondere in einem Bereich zwischen 100° und 120°. Besonders bevorzugt ist ein Winkel von 120°.

Gemäß einem exemplarischen Ausführungsbeispiel kann die Bohrspitze flügelfrei ausgebildet sein. Metallische Flügel an einer Bohrspitze werden herkömmlich eingesetzt, um das Material des Untergrunds, insbesondere Holz, mechanisch mürbe zu machen und somit das Eindringen der Schraube in den Untergrund zu erleichtern. Indem erfindungsgemäß derartige Flügel entbehrlich sind, kann der Herstellungsaufwand der Schraube signifikant reduziert werden.

Gemäß einem Ausführungsbeispiel kann die Bohrspitze zum Durchbohren eines Weichmetalls, insbesondere von Aluminium oder aber auch Messing oder Kupfer, ausgebildet sein. Eine gemäß Ausführungsbeispielen der Erfindung vorteilhafte Koordination von Zwangsvorschub des Gewindes in dem ersten Untergrundabschnitt und dem Vortrieb der Bohrspitze in dem zweiten Untergrundabschnitt kann insbesondere dann erreicht werden, wenn ein metallisches Material des zweiten Untergrundabschnitt keine zu große Härte im Vergleich zu Holz aufweist. Ein Weichmetall wie Aluminium, Kupfer oder Messing hat diesbezüglich günstigere Eigenschaften als ein härteres Metall wie Stahl (das bei entsprechender Konfiguration der Schraube aber gegebenenfalls auch eingesetzt werden kann). Vorteilhaft kann somit der zweite Untergrundabschnitt ein Weichmetall, insbesondere Aluminium, aufweisen oder daraus bestehen. Es ist allerdings auch möglich, dass der zweite Untergrundabschnitt aus einem Hartholz oder einem Hartkunststoff besteht, das/der eine größere Härte aufweist als ein weicheres Holz oder ein weicherer Kunststoff, aus dem der erste Untergrundabschnitt gebildet sein kann.

Gemäß einem Ausführungsbeispiel kann der Gewindeabschnitt zum Selbstschneiden eines Gewindes in vorgebohrtem oder sogar vorbohrungsfreiem Holz und zum Selbstschneiden eines Gewindes in vorgebohrtem oder sogar vorbohrungsfreiem Aluminium ausgebildet sein. Anders ausgedrückt können die Festigkeit sowie die Geometrie der Gewindegänge des Gewindeabschnitts so ausgebildet sein, dass damit ein Schneiden eines Gewindes in Holz und in Aluminium bzw. allgemeiner ausgedrückt in beiden Untergrundabschnitten ermöglicht ist. Entsprechend kann der erste Untergrundabschnitt Holz aufweisen oder daraus bestehen. Alternativ ist es möglich, dass der erste Untergrundabschnitt ein Kunststoff oder ein anderes eher weiches Material ist, das von der Schraube mit einer geringeren Kraft durchdrungen werden kann als der härtere zweite Untergrundabschnitt. Durch das Selbstschneiden eines Gewindes in beiden Untergrundabschnitten kann die Schraube nach Einbringen in beide Untergrundabschnitte eine hohe Tragkraft entfalten.

Gemäß einem Ausführungsbeispiel kann der Schraubenkopf einen größeren Durchmesser (senkrecht zur Eintreibrichtung) als der Rest der Schraube aufweisen. Der Schraubenkopf kann insbesondere mit einer planen Unterseite (zum Beispiel einer ebenen Ringfläche) zum flächigen Anliegen an einer Oberfläche des ersten Untergrundabschnitts ausgebildet sein. Dadurch ist für einen Benutzer die Beendigung des Eintreibvorgangs haptisch und optisch klar erkennbar, da die Unterseite des Schraubenkopfs dann einen Anschlag oder Stopp bildet.

Gemäß einem Ausführungsbeispiel kann ein Verhältnis zwischen einem Durchmesser des Schraubenkopfs und einem größten Durchmesser des Rests der Schraube in einem Bereich zwischen 1,5 und 2,5, insbesondere in einem Bereich zwischen 1,8 und 2,2, liegen. Insbesondere kann das Verhältnis in der Größenordnung von zwei liegen. Mit einem so großen Schraubenkopf kann bei Anliegen des Schraubenkopfs an einer Außenfläche des ersten Untergrundabschnitts eine ausreichend hohe Anpresskraft bewirkt werden, was die Stabilität der Befestigung erhöht und auch eine Dichtwirkung entfalten kann.

Gemäß einem Ausführungsbeispiel kann die Schraube in einem Grenzbereich zwischen dem Verjüngungsabschnitt und dem vorderseitigen Bohrabschnitt einen Hinterschnitt aufweisen. Dieser Bohrabschnitt kann einen kegelförmigen oder annähernd kegelförmigen Bereich an der Bohrspitze sowie einen sich daran unmittelbar anschließenden kreiszylindrischen oder annähernd kreiszylindrischen Bereich aufweisen, der sich wiederum unter Bildung eines Hinterschnitts an den Verjüngungsabschnitt anschließen kann. Mit anderen Worten kann ein Außendurchmesser des Verjüngungsabschnitts an einer Position, an welcher der Verjüngungsabschnitt direkt an den Bohrabschnitt angrenzt, kleiner als ein Außendurchmesser des Bohrabschnitts an dieser Stelle sein. Dadurch kann ein Aufnahmevolumen für verdrängtes oder abgeschabtes oder gebohrtes oder geschnittenes Material des ersten Untergrundabschnitts, aber auch des zweiten Untergrundabschnitts, geschaffen werden, was die Montage der Schraube mit geringem Kraftaufwand begünstigt und ein Steckenbleiben der Schraube bei der Montage verhindert. Ferner hat sich gezeigt, dass ein sich verjüngender Bereich als Führung dient, die ein Abführen des von dem ersten bzw. zweiten Untergrundabschnitt entfernten Materials fördert.

Gemäß einem Ausführungsbeispiel kann der Verjüngungsabschnitt konisch ausgebildet sein. Anders ausgedrückt kann der Verjüngungsabschnitt die Geometrie eines Kreiskegelstumpfs aufweisen, dessen kleinere Deckfläche an die Bohrspitze anschließt und dessen größere Deckfläche an den Gewindeabschnitt anschließt. Insbesondere kann der Übergang zwischen dem Verjüngungsabschnitt und dem Gewindeabschnitt kontinuierlich bzw. stetig sein. Durch eine kontinuierliche Verjüngung der Schraube im Verjüngungsabschnitt kann ein kraftarmes Durchbohren der Schraube durch den Untergrund weiter gefördert werden, während gleichzeitig der Abtransport entfernten Materials gefördert wird.

Gemäß einem Ausführungsbeispiel kann zwischen dem Schraubenkopf und dem Gewindeabschnitt ein gewindefreier Abschnitt ausgebildet sein. Die axiale Gewindelänge sollte nicht zu groß sein, da der Gewindeabschnitt auch als Rutschkupplung wirkt. Dies bedeutet, dass bei einer passend gewählten Gewindelänge ein Überschreiten einer Grenzkraft während des Einbringens des Bohrstabdübels zu einem erwünschten Durchdrehen des Gewindes in dem Untergrundabschnitt aus Holz führt, wodurch verhindert wird, dass der Untergrundabschnitt aus Holz durch eine übermäßige Kraft zerstört wird. Aus diesem Grund ist die Gewindelänge bei der Schraube nicht vollkommen frei wählbar. Um den Bohrstabdübel gemäß einem exemplarischen Ausführungsbeispiel für unterschiedliche dicke erste Untergrundabschnitte (zum Beispiel für unterschiedliche Balkendicken) einsetzen zu können, ohne die Funktion des Gewindes als Rutschkupplung zu beeinträchtigen, kann durch Anpassen der Länge des gewindefreien Schaftabschnitts die Anpassung des Bohrstabdübels auf eine gewünschte Dicke des ersten Untergrundabschnitts erfolgen.

Gemäß einem Ausführungsbeispiel kann der gewindefreie Abschnitt einen kreiszylindrischen Abschnitt (mit einem kreisförmigen Querschnitt gleichbleibenden Durchmessers) aufweisen. Dieser dient zur Längenanpassung der Schraube auf vorliegende Dicken von Untergrundabschnitten, ohne dass durch den kreiszylindrischen Abschnitt eine erhöhte Reibung beim Einbringvorgang bewirkt wird. Der gewindefreie Abschnitt kann optional zusätzlich einen konischen Abschnitt zwischen dem Schraubenkopf und dem kreiszylindrischen Abschnitt aufweisen. Der konische Abschnitt sorgt für eine Anpassung bzw. für einen Übergang zwischen dem kreiszylindrischen Abschnitt geringeren Durchmessers und dem Schraubenkopf größeren Durchmessers.

Gemäß einem Ausführungsbeispiel kann der Gewindeabschnitt mit einem UNC-Gewinde versehen sein. UNC steht hierbei für Unified Coarse Thread Series und bezeichnet ein amerikanisches Einheitsgewinde. Wenngleich andere Ausführungsbeispiele der Erfindung auch mit einem metrischen Gewinde realisiert werden können, hat sich die Verwendung eines UNC- Gewindes am Gewindeabschnitt als besonders vorteilhaft herausgestellt.

Gemäß einem Ausführungsbeispiel kann sich der Gewindeabschnitt ausgehend von dem (d.h. unmittelbar angrenzend an den) Verjüngungsabschnitt so weit in Richtung des Schraubenkopfs erstrecken, dass im montierten Zustand der Schraube der Gewindeabschnitt mindestens teilweise in dem zweiten Untergrundabschnitt greift Mit anderen Worten kann der Gewindeabschnitt sowohl in dem ersten Untergrundabschnitt (für den Vorschub) als auch in dem zweiten Untergrundabschnitt (für eine Befestigung der Untergrundabschnitte) verankernd bzw. befestigend wirken. Gemäß dem beschriebenen Ausführungsbeispiel reicht das Gewinde vom Verjüngungsabschnitt so weit entlang des Schaftabschnitts, dass es im montierten Zustand der Schraube mindestens im zweiten Untergrundabschnitt greift.

Gemäß einem Ausführungsbeispiel kann an dem ersten Untergrundabschnitt ein Aufnahmespalt zum Aufnehmen des zweiten Untergrundabschnitts vorgesehen sein. Zum Beispiel kann der erste Untergrundabschnitt gemeinsam mit einem dritten Untergrundabschnitt ein Profil aufweisen, das im Wesentlichen eine U-Form hat. Der Aufnahmespalt kann also zwischen dem ersten Untergrundabschnitt und dem dritten Untergrundabschnitt gebildet sein und so dimensioniert sein, dass er einen zugehörigen Teil des zweiten Untergrundabschnitts formschlüssig, insbesondere zusätzlich reibschlüssig, aufnehmen kann.

Gemäß einem Ausführungsbeispiel kann der zweite Untergrundabschnitt eine erste Befestigungsplatte zum Befestigen an einem Trägerkörper und eine sich ausgehend von der ersten Befestigungsplatte aus erstreckende (zum Beispiel senkrecht daran angestückte) zweite Befestigungsplatte zum Eingreifen in einen Aufnahmespalt des ersten Untergrundabschnitts (bzw. zwischen dem ersten Untergrundabschnitt und dem dritten Untergrundabschnitt) aufweisen. Insbesondere können die erste Befestigungsplatte und die zweite Befestigungsplatte gemeinsam ein T-förmiges Profil bilden. Der zweite Untergrundabschnitt kann beispielsweise ein Abschnitt einer Knotenplatte sein, welche bei Fachwerk- oder Rahmenkonstruktionen eingesetzte Holzbauteile verbinden können. Eine solche Knotenplatte kann in einen mittigen Aufnahmespalt zwischen dem ersten Untergrundabschnitt und dem zweiten Untergrundabschnitt eingesetzt werden und mit der Schraube fixiert werden.

Gemäß einem Ausführungsbeispiel kann die zweite Befestigungsplatte mindestens eine Befestigungsöffnung zum Durchführen eines Befestigungselements zum Befestigen der zweiten Befestigungsplatte an dem Trägerkörper aufweisen. Eine Fixierung der Knotenplatte an dem Trägerkörper, der ebenfalls aus Holz ausgebildet sein kann (zum Beispiel eine Holzwand sein kann), kann beispielsweise unter Verwendung von metallischen Stabdübeln oder Schrauben als Befestigungselemente erfolgen.

Gemäß einem Ausführungsbeispiel kann die Montageanordnung den hinter dem zweiten Untergrundabschnitt und gegenüberliegend dem ersten Untergrundabschnitt angeordneten dritten Untergrundabschnitt aufweisen. Der zweite Untergrundabschnitt kann härter als der dritte Untergrundabschnitt sein. Ferner kann eine zusätzliche Schraube mit den oben beschriebenen Merkmalen zum Einbringen in mindestens den dritten Untergrundabschnitt und den zweiten Untergrundabschnitt vorgesehen sein, um den dritten Untergrundabschnitt an dem zweiten Untergrundabschnitt zu montieren. Der erste Untergrundabschnitt und der dritte Untergrundabschnitt können einstückig als Holzbauteil mit einem U-förmigen Kopplungsabschnitt ausgebildet sein. Zwischen dem ersten Untergrundabschnitt und dem dritten Untergrundabschnitt kann der Aufnahmespalt ausgebildet sein. Durch das beidseitige Befestigen des in den Aufnahmespalt eingeführten zweiten Untergrundabschnitts durch die genannten Schrauben, die entlang von einander entgegengesetzten oder antiparallelen Richtungen durch den ersten bzw. dritten Untergrundabschnitt jeweils in den zweiten Untergrundabschnitt hinein eingeführt werden, kann eine gleichmäßige Krafteinleitung und eine spannungsarme Montage realisiert werden.

Gemäß einem Ausführungsbeispiel kann die Schraube drehangetrieben werden, so dass die Schraube mit einem solchen Zwangsvorschub durch das in dem ersten Untergrundabschnitt selbstgeschnittene Gewinde vorgetrieben wird, dass der dabei entstehende Zwangsvorschub mit einer Bohrgeschwindigkeit der Bohrspitze in dem zweiten Untergrundabschnitt synchronisiert ist. Ein derartiger Drehantrieb kann als motorische Antriebseinrichtung, insbesondere als Bohrmaschine, oder gegebenenfalls auch händisch unter Einsatz von Muskelkraft und eines entsprechenden Antriebswerkzeugs, insbesondere als Schraubendreher, ausgebildet werden. Gemäß einem bevorzugten Ausführungsbeispiel wird somit eine Zwangsvorschubsgeschwindigkeit auf eine Bohrgeschwindigkeit angepasst. Die Zwangsvorschubgeschwindigkeit ist dabei die Geschwindigkeit, mit welcher die Schraube durch das selbstgeschnittene Gewinde zwangsläufig durch den ersten Untergrundabschnitt vorwärts getrieben wird, da der Gewindeabschnitt der Schraube dem selbstgeschnittenen Gewinde zwangsweise folgt. Die Bohrgeschwindigkeit ist jene Geschwindigkeit mit welcher die Bohrspitze in den zweiten Untergrundabschnitt eindringt. Indem erfindungsgemäß diese beiden Geschwindigkeiten miteinander koordiniert werden, ist überraschenderweise die Montage eines Holzbauteils an einem metallischen Bauteil mittels der Bohrschraube ermöglicht, ohne dass hierfür ein nennenswerter axialer Kraftaufwand durch einen Benutzer aufgebracht werden muss. Stattdessen kann die Kraft durch die motorische Antriebseinrichtung aufgebracht werden.

Gemäß einem Ausführungsbeispiel kann die Schraube mittels Kaltmassivumformen (zum Ausbilden von Kopf und Antrieb), Kneifen (zum Ausbilden von Spitze und Hinterschnitt) und Walzen (zum Bilden des Gewindes) ausgebildet werden. Indem die Schraube flügelfrei, das heißt ohne Metallflügel an dem Bohrabschnitt bzw. an der Bohrspitze, ausgebildet werden kann, ist eine einfache Herstellbarkeit der Schraube ermöglicht, ohne dass aufwendige Spezialverfahren angewendet werden müssten.

Gemäß der Erfindung wird der Gewindeabschnitt der Schraube derart konfiguriert, dass beim Gewindeschneiden in dem ersten Untergrundabschnitt die Schraube mit Zwangsvorschub in dem ersten Untergrundabschnitt und in dem zweiten Untergrundabschnitt vorwärts getrieben wird. Wenn die Schraube im Zwangsvorschub bewegt wird, bedeutet dies, dass das fortwährende Drehen des Schraubengewindes in dem bereits vorgeschnittenen Gewindebereich des ersten Untergrundabschnitts auch (teilweise oder vollständig) die Vorschubkraft zum Einbringen der Bohrspitze in den zweiten Untergrundabschnitt aufbringt. Die Schraube geht dann aufgrund ihrer Konfiguration während des Eindringens in die Untergrundabschnitte selbsttätig in Zwangsvorschub. Anders ausgedrückt ist durch einen Benutzer keine oder fast keine axiale Kraft mehr nötig, um den Bohrstabdübel in die beiden Untergrundabschnitte einzubringen, sobald der Gewindeabschnitt in das Holz eindreht. Die Kraft zum Einbringen wird dann von der Setzmaschine bzw. einem Schraubgerät aufgebracht, nicht mehr durch den Benutzer.

Gemäß einem Ausführungsbeispiel kann das Konfigurieren des Gewindeabschnitts ein Einstellen einer Gewindesteigung, einer radialen Gewindehöhe und/oder einer Gewindelänge aufweisen. Es hat sich herausgestellt, dass eine Einstellung von einem oder mehreren dieser drei Parameter es erlaubt, den Zwangsvorschub beim Einbringen der Schraube in die beiden Untergrundabschnitte mit der Bohrgeschwindigkeit im zweiten Untergrundmaterial zu synchronisieren.

Unter der Gewindesteigung wird insbesondere ein axialer Abstand zwischen Gewindegängen nach einer Umdrehung verstanden. Durch entsprechendes Einstellen der Steigung der Schraube kann bewirkt werden, dass diese sich nicht zu schnell eindreht, was die Erfüllung der Bedingungen für einen Zwangsvorschub unerwünscht beeinträchtigen könnte. Ein zu schneller Vorschub würde die Koordination zwischen dem Eindringen in den ersten Untergrundabschnitt und dem Eindringen in den zweiten Untergrundabschnitt beeinträchtigen.

Unter der Gewindehöhe wird ein radialer Abstand zwischen Gewindekern und Gewindeaußendurchmesser verstanden. Durch eine geeignete Einstellung der Gewindehöhe kann die Kraft begrenzt werden, die auf das Holz einwirkt, wenn die Schraube eingedreht wird. Dadurch kann bewirkt werden, dass die Schraube erwünschterweise in dem Holz durchdreht, bevor diese infolge eines zu großen Krafteintrags das Holzbauteil spalten würde.

Unter der axialen Gewindelänge wird die axiale Länge des Schaftabschnitts verstanden, die mit dem Gewinde versehen ist. Wird diese zu klein, so wird das Einbringen der Schraube in die Untergrundabschnitte kraftraubend. Wird diese zu groß, so kann der Krafteintrag in das Holz zu groß werden und das Holzbauteil somit beschädigt werden.

Im Folgenden werden exemplarische Ausführungsbeispiele der vorliegenden Erfindung mit Verweis auf die folgenden Figuren detailliert beschrieben.
Figur 1 zeigt eine Schraube gemäß einem exemplarischen Ausführungsbeispiel der Erfindung.
Figur 2 zeigt eine Montageanordnung gemäß einem exemplarischen Ausführungsbeispiel der Erfindung mit einer Schraube gemäß Figur 1.
Figur 3 zeigt eine Montageanordnung gemäß einem anderen exemplarischen Ausführungsbeispiel der Erfindung mit zwei Schrauben gemäß Figur 1.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden:
Durch die genau abgestimmte Gewindeart und Gewindesteigung geht ein Bohrstabdübel gemäß einem exemplarischen Ausführungsbeispiel in den Zwangsvorschub und leitet Drehmoment einer Antriebsmaschine über die Gewindesteigung in Holz in den Axialdruck für den Bohrvorgang um. Durch den Zwangsvorschub wird eine hohe Einschraubgeschwindigkeit erreicht, und es entsteht wenig Wärme durch Reibung. Wenn von beiden Seiten ein Stabdübel eingeschoben wird, führt dies nicht zu einer Abminderung der Verbindungskraft, und das Aufspreizen des Holzes wird verhindert. Dies erhöht weiter die Querzugfestigkeit.

Ein Bohrstabdübel gemäß einem exemplarischen Ausführungsbeispiel der Erfindung wird somit im Zwangsvorschub eingeschraubt, das heißt gebohrt. Beim Bohren in Aluminium erfolgt kein Überdrehen des Gewindes im Holz, dadurch wird Aluminium in wenigen Umdrehungen durchgebohrt. Durch den Schraubenkopf mit einem Durchmesser von ungefähr dem Doppelten des Nenndurchmessers des Verbinders kann eine höhere Kraftübertragung des Knotenpunktes erreicht werden, wenn der Bohrstabdübel von beiden Seiten eingeschraubt wird.

Zur Montage kann der Untergrund mittels des Bohrstabdübels angebohrt werden und geht über das Gewinde in den Zwangsvorschub. Der Bohrvorgang kann nun auch durch das Metall im Zwangsvorschub durchgeführt werden. Eine Anpassung von Gewindelänge, Gewindedurchmesser und Gewindesteigung führt zu einer weiteren Steigerung der Leistungsfähigkeit.

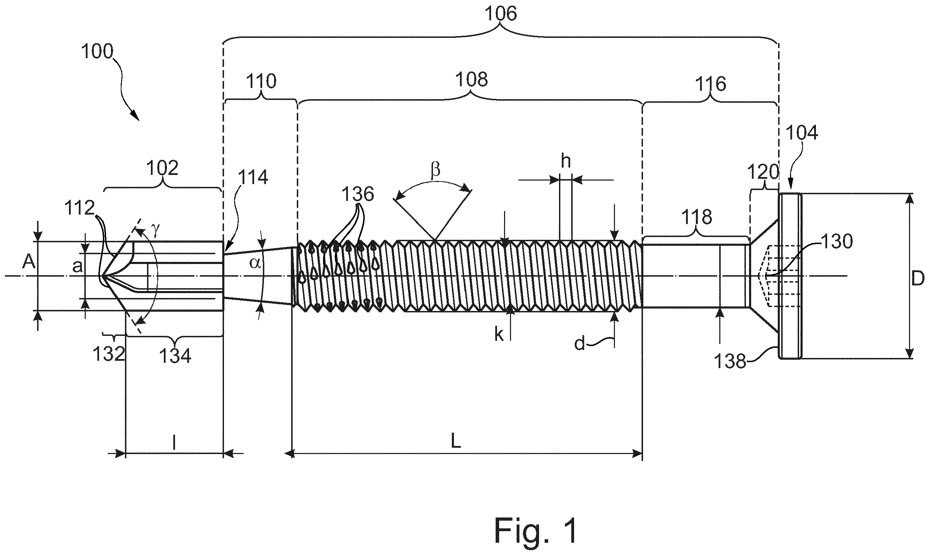

**Figur 1** zeigt eine Schraube 100 gemäß einem exemplarischen Ausführungsbeispiel der Erfindung, die als Bohrstabdübel eingesetzt werden kann.

Die Schraube 100 ist dazu ausgebildet, mit einem gemäß Figur 1 linken Abschnitt in einen nicht gezeigten Untergrundabschnitt aus Aluminium (insbesondere in eine Knotenplatte) einzudringen und mit einem gemäß Figur 1 rechten Abschnitt in einen nicht gezeigten anderen Untergrundabschnitt aus Holz (insbesondere in ein Holzbauteil, das mittels der Knotenplatte an einem Trägerkörper aus Holz befestigt werden soll) einzudringen.

Die Schraube 100, die einstoffig aus Edelstahl gefertigt werden kann, weist eine vorderseitige Bohrspitze 102 zum Durchbohren des Untergrundabschnitts aus Holz und zum Einbohren in den Untergrundabschnitt aus Metall auf. Wie Figur 1 zu entnehmen ist, weist die Bohrspitze 102 Bohrschneiden 112 auf. In einem vorderseitigen Endbereich 132 hat die Bohrspitze 102 eine kegelmantelförmige Einhüllende. In einem sich daran unmittelbar anschließenden rückseitigen Endbereich 134 hat die Bohrspitze 102 eine kreiszylinderförmige Einhüllende. Die gesamte Bohrspitze 102 ist ohne metallische Flügel und somit flügelfrei ausgebildet, die bei herkömmlichen Schrauben teilweise eingesetzt werden.

Ein rückseitiges Ende der Schraube 100 ist durch einen Schraubenkopf 104 mit einem Antrieb 130 zum Drehantreiben der Schraube 100 gebildet. Der Antrieb 130 kann als Längsschlitz, als Kreuzschlitz, als Imbus oder, wie gezeigt, als AW-Antrieb ausgebildet werden. Der Schraubenkopf 104 hat einen gegenüber dem Rest der Schraube 100 vergrößerten Durchmesser D, der im gezeigten Ausführungsbeispiel etwas mehr als doppelt so groß wie ein größter Durchmesser d des Rests der Schraube 100 ist. Durch eine ringförmige Anschlagfläche 138 an einer Unterseite des Schraubenkopfs 104 ist ein sattes Anliegen des Schraubenkopfs 104 an einer Außenfläche eines Untergrundabschnitts aus Holz ermöglicht. Alternativ kann der Schraubenkopf als Zylinder- oder Senkkopf ausgeführt werden, wobei der Kopfdurchmesser nur geringfügig gegenüber dem Außendurchmesser des Gewindes vergrößert ist, um den Kopf vollständig im Holz zu versenken.

Den gesamten Bereich zwischen der Bohrspitze 102 und dem Schraubenkopf 104 bildet ein Schaftabschnitt 106.

Ein hinteres Ende des Schaftabschnitts 106 ist durch einen gewindefreien Abschnitt 116 mit glatter Oberfläche gebildet. Dieser hat einen unmittelbar an den Schraubenkopf 104 angeschlossenen konischen Übergangsbereich 120 und einen wiederum daran unmittelbar angeschlossenen glatten kreiszylindrischen Abschnitt 118. Der konische Übergangsbereich 120 dämpft ein Anschlagen der Schraube 100 an eine äußere Oberfläche des Untergrundabschnitts aus Holz. Der glatte kreiszylindrische Abschnitt 118 dient zum reibungsarmen Einbringen in das Holz und erlaubt eine Skalierung der Schraube 100 bezüglich einer Dicke von miteinander zu verbindenden Untergrundabschnitten.

Ein mittlerer Bereich des Schaftabschnitts 106, direkt angrenzend an den kreiszylindrischen Abschnitt 118, ist ein Gewindeabschnitt 108 mit einem sowohl in Holz als auch in Aluminium selbstschneidenden Gewinde. Ein Vorderbereich dieses Gewindes hat an den Gewindegängen optionale Aussparungen 136, die Schneidstege bilden, welche beim Gewindeschneiden unterstützend wirken. Anschaulich dienen diese Einläufe zum Gewindebohren, können aber auch ein Abtransportieren von geschnittenem Material des Untergrunds erleichtern. Ein hinterer Bereich dieses Gewindes ist von solchen Vertiefungen frei und ist somit durch einen unterbrechungsfreien helikalen oder spiralförmigen Gewindegang gebildet.

Ein Kerndurchmesser des Gewindeabschnitts 108 ist mit k bezeichnet. Als radiale Gewindehöhe wird [d-k]/2 bezeichnet. Die Gewindehöhe hat einen maßgeblichen Einfluss auf die Stärke der Kraft, die auf einen Untergrundabschnitt aus Holz ausgeübt wird, wenn die Schraube 100 in diesen eingedreht wird.

Direkt zwischen der Bohrspitze 102 einerseits und einem vorderseitigen Ende des Gewindeabschnitts 108 andererseits ist ein gewindefreier und sich nach vorne hin (d.h. gemäß Figur 1 nach links hin) konisch verjüngender glatter Verjüngungsabschnitt 110 gebildet. Anders ausgedrückt ist sowohl zwischen der Bohrspitze 102 und dem Verjüngungsabschnitt 110 als auch zwischen dem Verjüngungsabschnitt 110 und dem Gewindeabschnitt 108 kein weiterer Abschnitt bzw. keine weitere Komponente vorgesehen. In einem Grenzbereich zwischen dem Verjüngungsabschnitt 110 und der Bohrspitze 102 ist ein Hinterschnitt 114 mit in der Seitenansicht gemäß Figur 1 im Wesentlichen dreieckförmiger Gestalt gebildet. Durch diesen Hinterschnitt 114 ist ein Hohlraum gebildet, in dem sich verdrängtes oder geschnittenes Material des Untergrunds (dauerhaft oder zeitweise, d.h. zumindest vor dessen Abtransport) anlagern kann, um ein reibungsarmes Schneiden des Untergrundmaterials durch die Schraube 100 zu fördern. Ein hinterseitiges Ende des Verjüngungsabschnitts 110 geht stetig in den Gewindeabschnitt 108 über.

Wenn die Schraube 100 (mit oder ohne Vorbohrung) in einen Untergrund mit einem außenseitigen Holzabschnitt und einem innenseitigen Aluminiumabschnitt eingebracht werden soll, durchdringt bei Drehantreiben der Schraube 100 zunächst die Bohrspitze 102 zuerst das Holz und dann das Aluminium. Sobald der Gewindeabschnitt 108 in das Holz eindringt, schneidet dieser selbsttätig ein Gewinde in dem Holz. Durch dieses Gewinde wirkt auf den restlichen Abschnitt des Gewindeabschnitts 108 eine Zwangskraft ein, welche bei fortgesetztem Drehantreiben die Schraube 100 mit einer zur Winkelgeschwindigkeit proportionalen, definierten Geschwindigkeit in den Untergrund eindreht und die Bohrspitze 102 beim Vortrieb durch das Aluminium mitnimmt. Durch die beschriebene Geometrie der Schraube 100 ist die Zwangskraftvortriebsgeschwindigkeit auf eine Bohrgeschwindigkeit der Bohrspitze 102 in den Aluminiumuntergrund angepasst. Dadurch ist ein bequemes und kraftarmes Eindringen der Schraube 100 in den zweikomponentigen Untergrund aus Holz und Aluminium ermöglicht. Am Ende des Einschraubvorgangs schlägt die Anschlagfläche 138 an der Unterseite des Schraubenkopfs 104 an eine Außenfläche des Untergrunds an. Dann ist mittels der Schraube 100 der Untergrundabschnitt aus Aluminium an dem Untergrundabschnitt aus Holz befestigt.

Im Weiteren werden einige Dimensionsangaben für die Schraube 100 beschrieben, welche für den oben beschriebenen kraftarmen und stabilen Befestigungsprozess dienlich sind.

Der Durchmesser D des Schraubenkopfs 104 kann in einem Bereich zwischen 10 mm und 30 mm liegen, zum Beispiel 18 mm betragen. Der Außendurchmesser d des Gewindeabschnitts 108 kann in einem Bereich zwischen 4 mm und 16 mm liegen, zum Beispiel 8 mm betragen. Der Außendurchmesser A der Bohrspitze 102 kann in einem Bereich zwischen 3 mm und 15 mm liegen, zum Beispiel 7 mm betragen. Der kleinste Durchmesser a des Verjüngungsabschnitts 110 kann in einem Bereich zwischen 3 mm und 6 mm liegen, zum Beispiel 4,5 mm betragen. Die axiale Gewindelänge L kann in einem Bereich zwischen 30 mm und 90 mm liegen, zum Beispiel 40 mm betragen. Die Länge I des Abschnitts 134 mit kreiszylindrischer Einhüllenden kann in einem Bereich zwischen 6 mm und 20 mm liegen, zum Beispiel 8 mm betragen. Die Gewindesteigung h des Gewindeabschnitts 108 kann zum Beispiel in einem Bereich zwischen 1 mm und 3 mm liegen, zum Beispiel 1,4 mm betragen. Ein Verjüngungswinkel α des Verjüngungsabschnitts 110 kann zum Beispiel in einem Bereich zwischen 5° und 25° liegen, zum Beispiel 15° betragen. Ein Flankenwinkel β des Gewindeabschnitts 108 kann zum Beispiel in einem Bereich zwischen 40° und 75° liegen, zum Beispiel 55° betragen. Ein Winkel γ, den die Bohrschneiden 112 miteinander einschließen, kann zum Beispiel in einem Bereich zwischen 90° und 130° liegen, zum Beispiel 110° betragen.

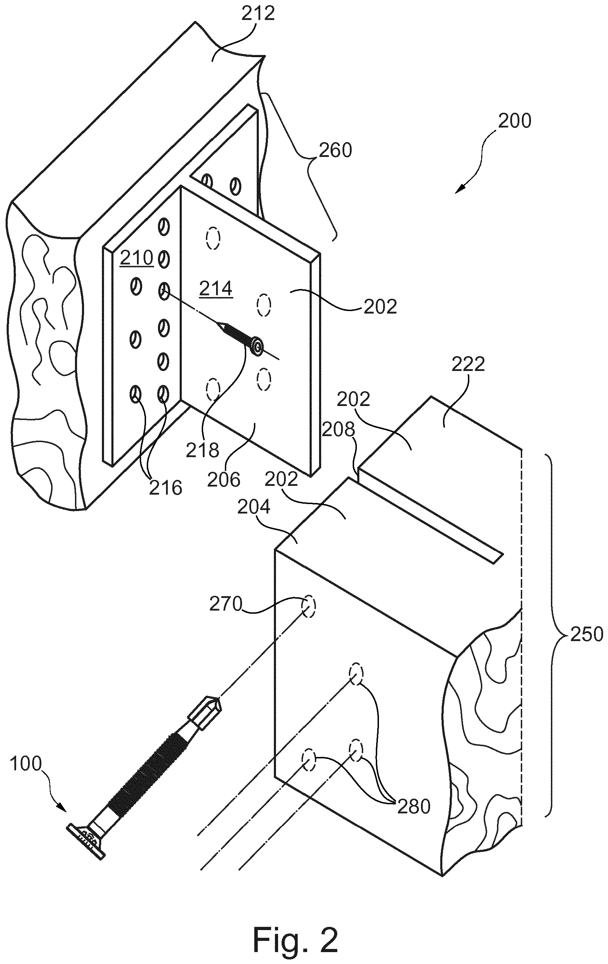

**Figur 2** zeigt eine Montageanordnung 200 gemäß einem exemplarischen Ausführungsbeispiel der Erfindung mit einer Schraube 100 gemäß Figur 1, die in einen Untergrund 202 eingebracht werden soll.

Die Montageanordnung 200 weist ein Holzbauteil 250 mit einem ersten Untergrundabschnitt 204 auf, der einer Schraube 100 gemäß Fig. 1 zugewandt ist. Bezogen auf die Schraube 100 hinter dem ersten Untergrundabschnitt 204 kann ein zweiter Untergrundabschnitt 206 aus Aluminium in Form einer ersten Befestigungsplatte 214 einer Knotenplatte 260 in einen Aufnahmeschlitz 208 in dem Holzbauteil 250 eingeführt werden. Das Holzbauteil 250 bildet ferner einen dritten Untergrundabschnitt 222, welcher der Schraube 100 abgewandt ist. Der Aufnahmeschlitz 208 ist zwischen dem ersten Untergrundabschnitt 204 und dem dritten Untergrundabschnitt 222 gebildet.

Um nach Einführen des zweiten Untergrundabschnitts 206 in den Aufnahmeschlitz 208 des Holzbauteils 250 die Knotenplatte 260 an dem Holzbauteil 250 zu befestigen, wird die Schraube 100 mit den bezugnehmend auf Figur 1 beschriebenen Merkmalen zunächst auf eine Zieloberfläche 270 des ersten Untergrundabschnitts 204 aufgesetzt, um dann - mit oder ohne Vorbohrung in dem ersten Untergrundabschnitt 204 - in den ersten Untergrundabschnitt 204 und nachfolgend in den zweiten Untergrundabschnitt 206 eingebracht zu werden. Mit Bezugszeichen 280 in Figur 2 ist weiterhin gezeigt, dass andere Schrauben 100 in andere Oberflächenbereiche des ersten Untergrundabschnitts 204 eingebracht werden können, um die Stabilität der Befestigung weiter zu verbessern.

Wie Figur 2 weiterhin zu entnehmen ist, hat die aus Aluminium bestehende Knotenplatte 260 eine zweite Befestigungsplatte 210, die an die erste Befestigungsplatte 214 rechtwinklig, einstückig und einstoffig angestückt ist und alternativ angeschweißt oder angeschraubt ist. Die erste Befestigungsplatte 214 und die zweite Befestigungsplatte 210 bilden gemeinsam ein T-förmiges Profil, alternativ sind ein L-förmiges Profil oder ein I-förmiges Profil möglich.

Es ist auch möglich, dass die Knotenplatte 260 eine dritte Befestigungsplatte (nicht gezeigt) aufweist, die parallel zu der ersten Befestigungsplatte 214 angeordnet ist und in einem Abstand von der ersten Befestigungsplatte 214 ebenfalls an die zweite Befestigungsplatte 210 angestückt ist. In diesem Fall ist die Knotenplatte im Wesentlichen als Doppel-T-Profil (TT) ausgebildet. In diesem Fall können zwei Schrauben 100 verwendet werden, um die Knotenplatte 260 an dem Holzbauteil 250 zu befestigen.

Von diesen zwei Schrauben 100 kann eine erste durch die erste Befestigungsplatte 214 und durch das Holzbauteil 250, nicht aber durch die dritte Befestigungsplatte geführt werden. Von den beiden Schrauben 100 kann die andere durch die dritte Befestigungsplatte und durch das Holzbauteil 250, nicht aber durch die erste Befestigungsplatte 214, geführt werden.

Alternativ können die beiden Schrauben 100 in unterschiedlichen Richtungen jeweils sowohl durch die erste Befestigungsplatte 214 als auch durch die dritte Befestigungsplatte sowie durch das Holzbauteil 250 geführt werden.

Die zweite Befestigungsplatte 210 kann an einem Trägerkörper 212, zum Beispiel einer Holzwand, befestigt werden, indem Befestigungsschrauben 218 durch entsprechende Befestigungsöffnungen 216 in der zweiten Befestigungsplatte 210 und schließlich in den Trägerkörper 212 eingeführt werden.

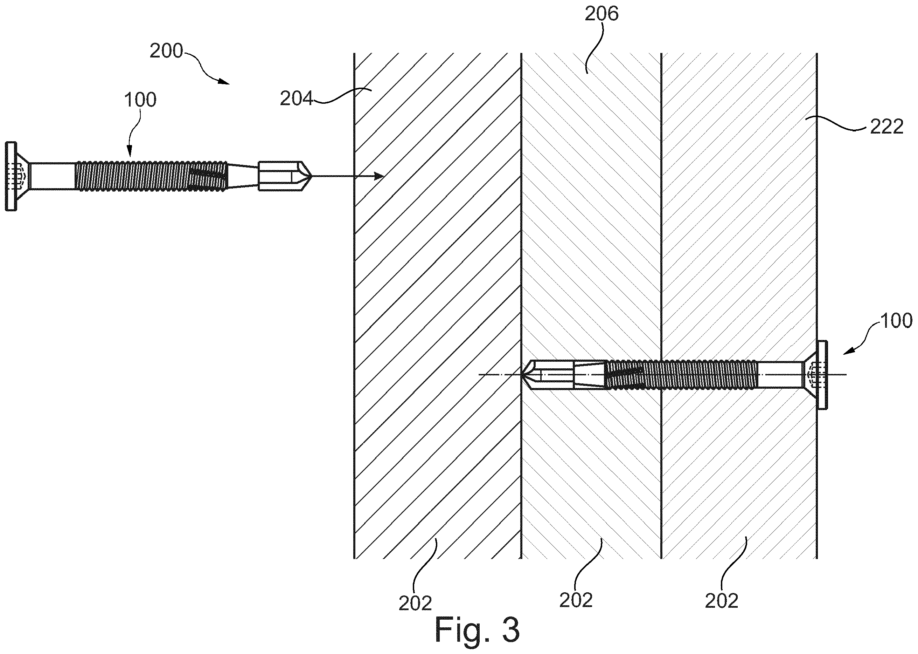

**Figur 3** zeigt eine Montageanordnung 200 gemäß einem exemplarischen Ausführungsbeispiel der Erfindung mit zwei Schrauben 100 gemäß Figur 1.

Obwohl, wie in Figur 2 gezeigt, bereits nur ein Bohrstabdübel bzw. nur eine Schraube 100 ausreicht, um das Holzbauteil 250 an der Knotenplatte 260 zu befestigen, kann mit dem Einführen mehrerer Schrauben 100 von unterschiedlichen Seiten her nicht nur die Stabilität überproportional verbessert werden, sondern kann simultan auch die Anfälligkeit der resultierenden Struktur gegen das Ausbilden innerer Spannungen verringert werden. Hierfür kann, wie in Figur 3 gezeigt, zunächst von der rechten Seite her eine Schraube 100 zunächst durch den dritten Untergrundabschnitt 222 und dann in den zweiten Untergrundabschnitt 206 eingeführt werden. Dabei reicht der Gewindeabschnitt 108 vom Verjüngungsabschnitt 110 so weit über den Schaftabschnitt 106, dass der Gewindeabschnitt 108 im montierten Zustand der Schraube 100 in beiden Untergrundabschnitten 222,206 fixiert ist. Nachfolgend kann eine weitere Schraube 100 zunächst durch den ersten Untergrundabschnitt 204 und dann in den zweiten Untergrundabschnitt 206 eingeführt werden.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Montageanordnung (200), aufweisend:
einen ersten Untergrundabschnitt (204);
einen zumindest teilweise hinter dem ersten Untergrundabschnitt (204) anzuordnenden und daran zu montierenden härteren zweiten Untergrundabschnitt (206);
mindestens eine Schraube (100) zum Einbringen in den ersten Untergrundabschnitt (204) und den zweiten Untergrundabschnitt (206), um den ersten Untergrundabschnitt (204) an dem zweiten Untergrundabschnitt (206) zu montieren;
wobei die Schraube (100) zum Einbringen in einem Untergrund (202) mit dem ersten Untergrundabschnitt (204) und dem zumindest teilweise dahinter angeordneten härteren zweiten Untergrundabschnitt (206) aufweist:
eine vorderseitige Bohrspitze (102) zum zumindest teilweisen Durchbohren des ersten Untergrundabschnitts (204) und des zweiten Untergrundabschnitts (206);
einen rückseitigen Schraubenkopf (104) mit einem Antrieb (130) zum Drehantreiben der Schraube (100);
einen Schaftabschnitt (106) zwischen der Bohrspitze (102) und dem Schraubenkopf (104) mit einem sich an den Schraubenkopf (104) direkt oder indirekt anschließenden, in dem ersten Untergrundabschnitt (204) und in dem zweiten Untergrundabschnitt (206) selbstschneidenden Gewindeabschnitt (108) und mit einem sich an die Bohrspitze (102) direkt anschließenden gewindefreien, sich vorderseitig verjüngenden Verjüngungsabschnitt (110), wobei sich der Verjüngungsabschnitt (110) direkt an den Gewindeabschnitt (108) anschließt;
wobei der Gewindeabschnitt (108) der Schraube (100) derart konfiguriert ist, dass beim Gewindeschneiden in dem ersten Untergrundabschnitt (204) die Schraube (100) mit Zwangsvorschub in dem ersten Untergrundabschnitt (204) und in dem zweiten Untergrundabschnitt (206) vorwärts getrieben wird.
wobei die Schraube (100) derart ausgebildet ist, dass eine Zwangsvorschubgeschwindigkeit auf eine Bohrgeschwindigkeit angepasst ist, wobei die Zwangsvorschubgeschwindigkeit die Geschwindigkeit ist, mit welcher die Schraube (100) durch das selbstgeschnittene Gewinde zwangsläufig durch den ersten Untergrundabschnitt (204) vorwärts getrieben wird, und wobei die Bohrgeschwindigkeit jene Geschwindigkeit ist, mit welcher die Bohrspitze (102) in den zweiten Untergrundabschnitt (206) eindringt.

2. Montageanordnung (200) gemäß Anspruch 1, aufweisend zumindest eines der folgenden Merkmale:
der erste Untergrundabschnitt (204) weist Holz auf oder besteht daraus;
der zweite Untergrundabschnitt (206) weist ein Weichmetall, insbesondere Aluminium, auf oder besteht daraus;
der Gewindeabschnitt (108) erstreckt sich ausgehend von dem Verjüngungsabschnitt (110) so weit in Richtung des Schraubenkopfs (104), dass im montierten Zustand der Schraube (100) der Gewindeabschnitt (108) in den zweiten Untergrundabschnitt (206) greift .

3. Montageanordnung (200) gemäß einem der Ansprüche 1 oder 2, aufweisend:
einen hinter dem zweiten Untergrundabschnitt (206) und gegenüberliegend dem ersten Untergrundabschnitt (204) angeordneten dritten Untergrundabschnitt (222), wobei der zweite Untergrundabschnitt (206) härter als der dritte Untergrundabschnitt (222) ist;
mindestens eine zusätzliche Schraube (100) mit den in Anspruch 1 angegebenen Merkmalen zum Einbringen in den dritten Untergrundabschnitt (222) und den zweiten Untergrundabschnitt (206), um den dritten Untergrundabschnitt (222) an dem zweiten Untergrundabschnitt (206) zu montieren.

4. Montageanordnung (200) gemäß einem der Ansprüche 1 bis 3, aufweisend zumindest eines der folgenden Merkmale:
die Bohrspitze (102) weist mindestens eine Bohrschneide (112) auf, wobei diese insbesondere flügelfrei ausgebildet ist;
die Bohrspitze (102) ist zum Durchbohren eines Weichmetalls, insbesondere von Aluminium, ausgebildet;
der Gewindeabschnitt (108) ist zum Selbstschneiden eines Gewindes in Holz und zum Selbstschneiden eines Gewindes in einem Weichmetall, insbesondere Aluminium, ausgebildet;
der Schraubenkopf (104) weist einen größeren Durchmesser (D) als der Rest der Schraube (100) auf, ist insbesondere mit einer planen Unterseite (138) zum flächigen Anliegen an einer Oberfläche des ersten Untergrundabschnitts (204) ausgebildet;
der Verjüngungsabschnitt (110) ist konisch ausgebildet;
der Gewindeabschnitt (108) ist mit einem UNC-Gewinde versehen.

5. Montageanordnung (200) gemäß einem der Ansprüche 1 bis 4, wobei die Schraube (100) in einem Grenzbereich zwischen dem Verjüngungsabschnitt (110) und der Bohrspitze (102) einen Hinterschnitt (114) aufweist.

6. Montageanordnung (200) gemäß einem der Ansprüche 1 bis 5, wobei zwischen dem Schraubenkopf (104) und dem Gewindeabschnitt (108) ein gewindefreier Schaftabschnitt (116) ausgebildet ist.

7. Montageanordnung (200) gemäß Anspruch 6, wobei der gewindefreie Abschnitt (116) einen kreiszylindrischen Abschnitt (118) aufweist und optional einen konischen Abschnitt (120) zwischen dem Schraubenkopf (104) und dem kreiszylindrischen Abschnitt (118).

8. Montageanordnung (200) gemäß einem der Ansprüche 1 bis 7, wobei ein Verhältnis zwischen einem Außendurchmesser (A) der Bohrspitze (102) und einem Außendurchmesser (d) des Gewindeabschnitts (108) in einem Bereich zwischen 0,8 und 0,95 liegt.

9. Verfahren zum Montieren eines ersten Untergrundabschnitts (204) und eines härteren zweiten Untergrundabschnitts (206) aneinander mittels mindestens einer Schraube (100), wobei das Verfahren aufweist:
Anordnen zumindest eines Abschnitts des zweiten Untergrundabschnitts (206) hinter dem ersten Untergrundabschnitt (204);
Drehantreiben mindestens einer der Schrauben (100) mittels Drehbetätigens eines Antriebs (130) an einem rückseitigen Schraubenkopf (104);
zumindest teilweises Durchbohren des ersten Untergrundabschnitts (204) und des zweiten Untergrundabschnitts (206) mit einer vorderseitigen Bohrspitze (102) der Schraube (100);
Schneiden eines Gewindes in dem ersten Untergrundabschnitt (204) und in dem zweiten Untergrundabschnitt (206) mit einem sich an den Schraubenkopf (104) direkt oder indirekt anschließenden selbstschneidenden Gewindeabschnitt (108) der Schraube (100);
zumindest zeitweises Aufnehmen von mittels der Schraube (100) bearbeitetem Material des ersten Untergrundabschnitts (204) und/oder des zweiten Untergrundabschnitts (206) an einem sich an die Bohrspitze (102) direkt anschließenden gewindefreien, sich zu der Bohrspitze (102) hin verjüngenden Verjüngungsabschnitt (110) der Schraube (100), wobei sich der Verjüngungsabschnitt (110) direkt an den Gewindeabschnitt (108) anschließt;
wobei die Schraube (100) drehangetrieben wird, so dass die Schraube (100) mit einem solchen Zwangsvorschub durch das in dem ersten Untergrundabschnitt (204) selbstgeschnittene Gewinde vorgetrieben wird, dass der entstehende Zwangsvorschub mit einer Bohrgeschwindigkeit der Bohrspitze (102) in dem zweiten Untergrundabschnitt (206) synchronisiert ist.

10. Verfahren zum Herstellen einer Schraube (100) zum Einbringen in einen Untergrund (202) mit einem ersten Untergrundabschnitt (204) und einem zumindest teilweise dahinter angeordneten härteren zweiten Untergrundabschnitt (206), wobei das Verfahren aufweist:
Ausbilden einer vorderseitigen Bohrspitze (102) zum zumindest teilweisen Durchbohren des ersten Untergrundabschnitts (204) und des zweiten Untergrundabschnitts (206);
Ausbilden eines rückseitigen Schraubenkopfs (104) mit einem Antrieb (130) zum Drehantreiben der Schraube (100);
Ausbilden eines Schaftabschnitts (106) zwischen der Bohrspitze (102) und dem Schraubenkopf (104) mit einem sich an den Schraubenkopf (104) direkt oder indirekt anschließenden, in dem ersten Untergrundabschnitt (204) und in dem zweiten Untergrundabschnitt (206) selbstschneidenden Gewindeabschnitt (108) und mit einem sich an die Bohrspitze (102) direkt anschließenden gewindefreien, sich vorderseitig verjüngenden Verjüngungsabschnitt (110), wobei sich der Verjüngungsabschnitt (110) direkt an den Gewindeabschnitt (108) anschließt;
Konfigurieren des Gewindeabschnitts (108) mit einem Einstellen einer Gewindesteigung (h), einer radialen Gewindehöhe ([d-k]/2) und/oder einer axialen Gewindelänge (L) derart, dass beim Gewindeschneiden in dem ersten Untergrundabschnitt (204) die Schraube (100) mit Zwangsvorschub in dem ersten Untergrundabschnitt (204) und in dem zweiten Untergrundabschnitt (206) vorwärts getrieben wird.

11. Verfahren gemäß Anspruch 10, wobei die Schraube (100) mittels Kaltmassivumformen, Kneifen und Walzen ausgebildet wird.

12. Verwendung einer Schraube (100) zum Befestigen eines ersten Untergrundabschnitts (204) aus Holz an einem zweiten Untergrundabschnitt (206) aus einem Weichmetall, insbesondere aus Aluminium, wobei die Schraube (100) aufweist:
eine vorderseitige Bohrspitze (102) zum zumindest teilweisen Durchbohren des ersten Untergrundabschnitts (204) und des zweiten Untergrundabschnitts (206);
einen rückseitigen Schraubenkopf (104) mit einem Antrieb (130) zum Drehantreiben der Schraube (100);
einen Schaftabschnitt (106) zwischen der Bohrspitze (102) und dem Schraubenkopf (104) mit einem sich an den Schraubenkopf (104) direkt oder indirekt anschließenden, in dem ersten Untergrundabschnitt (204) und in dem zweiten Untergrundabschnitt (206) selbstschneidenden Gewindeabschnitt (108) und mit einem sich an die Bohrspitze (102) direkt anschließenden gewindefreien, sich vorderseitig verjüngenden Verjüngungsabschnitt (110), wobei sich der Verjüngungsabschnitt (110) direkt an den Gewindeabschnitt (108) anschließt;
wobei der Gewindeabschnitt (108) der Schraube (100) derart konfiguriert ist, dass beim Gewindeschneiden in dem ersten Untergrundabschnitt (204) die Schraube (100) mit Zwangsvorschub in dem ersten Untergrundabschnitt (204) und in dem zweiten Untergrundabschnitt (206) vorwärts getrieben wird.

13. Verwendung gemäß Anspruch 12, wobei der erste Untergrundabschnitt (204) ein Abschnitt eines Holzbauteils und der zweite Untergrundabschnitt (206) ein Abschnitt einer metallischen Knotenplatte ist, mittels welcher das Holzbauteil unter Verwendung der Schraube (100) an einem Trägerkörper (212), insbesondere aus Holz, befestigt wird.

## Claims

1. A mounting arrangement (200), featuring:
a first substrate section (204);
a second, harder substrate section (206) to be arranged at least partially behind the first substrate section (204) and to be mounted thereon;
at least one screw (100) for being driven into the first substrate section (204) and the second substrate section (206) in order to mount the first substrate section (204) on the second substrate section (206);
wherein the screw (100) for being driven into a substrate (202) with the first substrate section (204) and the second, harder substrate section (206) arranged at least partially behind the first substrate section features:
a front drill tip (102) for at least partially drilling through the first substrate section (204) and the second substrate section (206);
a rear screw head (104) with a drive (130) for rotationally driving the screw (100);
a shaft section (106) between the drill tip (102) and the screw head (104), wherein said shaft section has a threaded section (108) that is arranged directly or indirectly adjacent to the screw head (104) and self-cuts into the first substrate section (204) and into the second substrate section (206), as well as a non-threaded taper section (110) that is arranged directly adjacent to the drill tip (102) and tapered toward the front, and wherein the taper section (110) its arranged directly adjacent to the threaded section (108);
wherein the threaded section (108) of the screw (100) is configured in such a way that the screw (100) is driven forward with positive advance in the first substrate section (204) and in the second substrate section (206) while the thread is cut into the first substrate section (204); and
wherein the screw (100) is designed in such a way that a positive advance speed is adapted to a drilling speed, with the positive advance speed being the speed, with which the screw (100) is positively driven forward through the first substrate section (204) by the self-cutting thread, and with the drilling speed being the speed, with which the drill tip (102) penetrates into the second substrate section (206).

2. The mounting arrangement (200) according to claim 1 with at least one of the following characteristics:
the first substrate section (204) features or consists of wood;
the second substrate section (206) features or consists of soft metal, particularly aluminum;
the threaded section (108) extends from the taper section (110) in the direction of the screw head (104) over such a length that the threaded section (108) engages into the second substrate section (206) in the installed state of the screw (100).

3. The mounting arrangement (200) according to one of claims 1 or 2, featuring
a third substrate section (222) that is arranged behind the second substrate section (206) and lies opposite of the first substrate section (204), wherein the second substrate section (206) is harder than the third substrate section (222);
at least one additional screw (100) with the characteristics disclosed in claim 1 for being driven into the third substrate section (222) and the second substrate section (206) in order to mount the third substrate section (222) on the second substrate section (206).

4. The mounting arrangement (200) according to one of claims 1-3 with at least one of the following characteristics:
the drill tip (102) features at least one cutting bit (112) that particularly is realized without fins;
the drill tip (102) is designed for drilling through soft metal, particularly aluminum;
the threaded section (108) is designed for self-cutting a thread into wood and for self-tapping a thread into soft metal, particularly aluminum;
the screw head (104) has a larger diameter (D) than the rest of the screw (100) and particularly is designed with a plane underside (138) for flatly adjoining a surface of the first substrate section (204);
the taper section (110) is designed conically;
the threaded section (108) is provided with a UNC-thread.

5. The mounting arrangement (200) according to one of claims 1-4, wherein the screw (100) features an undercut (114) in a border region between the taper section (110) and the drill tip (102).

6. The mounting arrangement (200) according to one of claims 1-5, wherein a non-threaded shaft section (116) is formed between the screw head (104) and the threaded section (108).

7. The mounting arrangement (200) according to claim 6, wherein the non-threaded section (116) has a circular-cylindrical section (118) and optionally a conical section (120) between the screw head (104) and the circular-cylindrical section (118).

8. The mounting arrangement (200) according to one of claims 1-7, wherein a ratio between an outside diameter (A) of the drill tip (102) and an outside diameter (d) of the threaded section (108) lies in the range between 0,8 and 0,95.

9. A method for mounting a first substrate section (204) and a second, harder substrate section (206) on one another by means of at least one screw (100), wherein said method features the steps of:
arranging at least one section of the second substrate section (206) behind the first substrate section (204);
rotationally driving at least one of the screws (100) by rotationally activating a drive (130) on a rear screw head (104);
at least partially drilling through the first substrate section (204) and the second substrate section (206) with a front drill tip (102) of the screw (100);
cutting a thread into the first substrate section (204) and into the second substrate section (206) with a self-cutting threaded section (108) of the screw (100) that is arranged directly or indirectly adjacent to the screw head (104);
at least temporarily accommodating material of the first substrate section (204) and/or the second substrate section (206) processed by means of the screw (100) on a non-threaded taper section (110) of the screw (100) that is arranged directly adjacent to the drill tip (102) and tapered toward the drill tip (102), wherein the taper section (110) is arranged directly adjacent to the threaded section (108);
wherein the screw (100) is rotationally driven such that the screw (100) is driven forward with such positive advance by the self-cutting thread in the first substrate section (204) that the resulting positive advance is synchronized with a drilling speed of the drill tip (102) in the second substrate section (206).

10. A method for producing a screw (100) for being driven into a substrate (202) with a first substrate section (204) and a second, harder substrate section (206) that is at least partially arranged behind the first substrate section, wherein said method features the steps of:
forming a front drill tip (102) for at least partially drilling through the first substrate section (204) and the second substrate section (206);
forming a rear screw head (104) with a drive (130) for rotationally driving the screw (100);
forming a shaft section (106) between the drill tip (102) and the screw head (104), wherein said shaft section has a threaded section (108) that is arranged directly or indirectly adjacent to the screw head (104) and self-cuts into the first substrate section (204) and into the second substrate section (206), as well as a non-threaded taper section (110) that is arranged directly adjacent to the drill tip (102) and tapered toward the front, and wherein the taper section (110) is arranged directly adjacent to the threaded section (108);
configuring the threaded section (108) by adjusting a thread pitch (h), a radial thread height ([d-k]/2) and an axial thread length (L) in such a way that the screw (100) is driven forward with positive advance in the first substrate section (204) and in the second substrate section (206) while the thread is cut into the first substrate section (204).

11. The method according to claim 10, wherein the screw (100) is formed by means of cold forging, nipping and rolling.

12. The utilization of a screw (100) for mounting a first substrate section (204) of wood on a second substrate section (206) of soft metal, particularly aluminum, wherein the screw (100) features:
a front drill tip (102) for at least partially drilling through the first substrate section (204) and the second substrate section (206);
a rear screw head (104) with a drive (130) for rotationally driving the screw (100);
a shaft section (106) between the drill tip (102) and the screw head (104), wherein said shaft section has a threaded section (108) that is arranged directly or indirectly adjacent to the screw head (104) and self - cuts into the first substrate section (204) and into the second substrate section (206), as well as a non-threaded taper section (110) that is arranged directly adjacent to the drill tip (102) and tapered toward the front, and wherein the taper section (110) is arranged directly adjacent to the threaded section (108);
wherein the threaded section (108) of the screw (100) is configured in such a way that the screw (100) is driven forward with positive advance in the first substrate section (204) and in the second substrate section (206) while the thread is cut into the first substrate section (204).

13. The utilization according to claim 12, wherein the first substrate section (204) is a section of a wood component and the second substrate section (206) is a section of a metallic gusset plate, by means of which the wood component is mounted on a supporting body (212), particularly of wood, with the aid of the screw (100).

## Revendications

1. Agencement de montage (200) comportant :
une première partie de support (204) ;
une deuxième partie de support (206) plus dure, qui doit être placée au moins en partie derrière la première partie de support (204) et montée sur cette dernière ;
au moins une vis (100) destinée à être introduite dans la première partie de support (204) et la deuxième partie de support (206), pour monter la première partie de support (204) sur la deuxième partie de support (206) ;
la vis (100) destinée à être introduite dans un support (202) avec la première partie de support (204) et la deuxième partie de support plus dure, placée au moins en partie derrière la première partie de support (206) comportant :
une pointe perceuse (102) avant, destinée à transpercer au moins en partie la première partie de support (204) et la deuxième partie de support (206) ;
une tête de vis (104) arrière avec un entraînement (130) pour entraîner en rotation la vis (100) ;
un tronçon de tige (106) entre la pointe perceuse (102) et la tête de vis (104) avec un tronçon fileté (108) auto-taraudeur dans la première partie de support (204) et dans la deuxième partie de support (206), se raccordant directement ou indirectement sur la tête de vis (104) et avec un tronçon de rétrécissement (110) non fileté, se rétrécissant sur la face avant, se raccordant directement sur la pointe foreuse (102), le tronçon de rétrécissement (110) se raccordant directement sur le tronçon fileté (108) ;
le tronçon fileté (108) de la vis (100) étant configuré de telle sorte que lors du taraudage dans la première partie de support (204), la vis (100) soit chassée vers l'avant par avance forcée, dans la première partie de support (204) et dans la deuxième partie de support (206),
la vis (100) étant conçue de telle sorte qu'une vitesse d'avance forcée est adaptée à une vitesse de forage, la vitesse d'avance forcée étant la vitesse à laquelle la vis (100) est chassée en avant à travers le taraudage auto-taraudé, de force à travers la première partie de support (204) et la vitesse de forage étant la vitesse à laquelle la pointe foreuse (102) pénètre dans la deuxième partie de support (206).

2. Agencement de montage (200) selon la revendication 1, comportant au moins l'une des caractéristiques suivantes :
la première partie de support (204) comporte du bois ou est constitué d'un tel ;
la deuxième partie de support (206) comporte un métal tendre, notamment de l'aluminium ou est constitué d'un tel ;
en partant du tronçon de rétrécissement (110), le tronçon fileté (108) s'étend dans la direction de la tête de vis (104) aussi loin pour que dans la position montée de la vis (100), le tronçon fileté (108) s'engage dans la deuxième partie de support (206).

3. Agencement de montage (200) selon l'une quelconque des revendications 1 ou 2, comportant :
une troisième partie de support (222) placée derrière la deuxième partie de support (206) et à l'opposée de la première partie de support (204), la deuxième partie de support (206) étant plus dure que la troisième partie de support (222) ;
au moins une vis (100) supplémentaire, avec les caractéristiques mentionnées dans la revendication 1, destinée à être introduite dans la troisième partie de support (222) et dans la deuxième partie de support (206) pour monter la troisième partie de support (222) sur la deuxième partie de support (206).

4. Agencement de montage (200) selon l'une quelconque des revendications 1 à 3, comportant au moins l'une des caractéristiques suivantes :
la pointe perceuse (102) comporte au moins une tranche d'alésage (112), celle-ci étant conçu notamment sans ailette ;
la pointe perceuse (102) est conçue pour transpercer un métal tendre, notamment de l'aluminium ;
le tronçon fileté (108) est conçu pour auto-tarauder un taraudage dans le bois et pour auto-tarauder un taraudage dans un métal tendre, notamment de l'aluminium ;
la tête de vis (104) présente un diamètre supérieur (D) à celui du reste de la vis (100), notamment par une face inférieure (138) plane, pour l'appui à plat sur une surface de la première partie de support (204) ;
le tronçon de rétrécissement (110) est conçu de forme conique ;
le tronçon fileté (108) est doté d'un filetage UNC.

5. Agencement de montage (200) selon l'une quelconque des revendications 1 à 4, dans une zone limite entre le tronçon de rétrécissement (110) et la pointe perceuse (102), la vis (100) comportant une contre-dépouille (114).

6. Agencement de montage (200) selon l'une quelconque des revendications 1 à 5, entre la tête de vis (104) et le tronçon fileté (108) étant conçu un tronçon de tige (116) non fileté.

7. Agencement de montage (200) selon la revendication 6, entre la tête de vis (104) et le tronçon (118) cylindrique circulaire, le tronçon (116) sans filetage comportant un tronçon (118) cylindrique circulaire et en option, un tronçon conique (120).

8. Agencement de montage (200) selon l'une quelconque des revendications 1 à 7, un rapport entre un diamètre extérieur (A) de la pointe perceuse (102) et un diamètre extérieur (d) du tronçon fileté (108) se situant dans un ordre compris entre 0,8 et 0,95.

9. Procédé de montage l'une sur l'autre d'une première partie de support (204) et d'une deuxième partie de support (206) plus dure à l'aide d'au moins une vis (100), le procédé comportant :
le placement d'au moins une partie de la deuxième partie de support (206) derrière la première partie de support (204) ;
l'entraînement en rotation d'au moins l'une des vis (100) par actionnement en rotation d'un entraînement (130) sur une tête de vis (104) arrière ;
le transperçage au moins partiel de la première partie de support (204) et de la deuxième partie de support (206) avec un pointe perceuse (102) avant de la vis (100) ;
le taraudage d'au moins un taraudage dans la première partie de support (204) et dans la deuxième partie de support (206) avec un tronçon de filetage (108) auto-taraudeur de la vis (100) se raccordant directement ou indirectement sur la tête de vis (104) ;
la reprise au moins temporaire de matière de la première partie de support (204) et/ou de la deuxième partie de support (206), ouvrée à l'aide de la vis (100) sur un tronçon de rétrécissement (110) non fileté de la vis (100) se raccordant directement sur la pointe perceuse (102) qui se rétrécit en direction de la pointe perceuse (102), le tronçon de rétrécissement (110) se raccordant directement sur le tronçon fileté (108) ;
la vis (100) étant entraînée en rotation de telle sorte que la vis (100) soit poussée en avant à travers le taraudage auto-taraudé dans la première partie de support (204) avec une avance forcée telle, que l'avance forcée créée soit synchronisée avec une vitesse de perçage de la pointe perceuse (102) dans la deuxième partie de support (206).

10. Procédé de fabrication d'une vis (100) destinée à être introduite dans un support (202) avec une première partie de support (204) et une deuxième partie de support (206) plus dure, placée au moins en partie derrière celle-ci, le procédé comportant :
la création d'une pointe perceuse (102) avant, destinée à transpercer au moins en partie la première partie de support (204) et la deuxième partie de support (206) ;
la création d'un tête de vis (104) arrière avec un entraînement (130) pour l'entraînement en rotation de la vis (100) ;
la création d'un tronçon de tige (106) entre la pointe perceuse (102) et la tête de vis (104) avec un tronçon fileté (108) se raccordant directement ou indirectement sur la tête de vis (104), auto-taraudeur dans la première partie de support (204) et dans la deuxième partie de support (206) et avec un tronçon de rétrécissement (110) se rétrécissant sur la face avant, se raccordant directement sur le pointe perceuse (102), le tronçon de rétrécissement (110) se raccordant directement sur le tronçon fileté (108) ;
la configuration du tronçon fileté (108) avec un réglage du pas de filetage (h), d'une hauteur radiale de filet ([d-k]/2) et/ou d'une longueur axiale de filet (L), de telle sorte que lors du taraudage dans la première partie de support (204), la vis (100) soit poussée en avant par une avance forcée dans la première partie de support (204) et dans la deuxième partie de support (206).

11. Procédé selon la revendication 10, lors duquel on conçoit la vis (100) par façonnage massif à froid, par tronçonnage et par laminage.

12. Utilisation d'une vis (100) destinée à fixer une première partie de support (204) en bois sur une deuxième partie de support (206) en un métal tendre, notamment en aluminium, la vis (100) comportant :
un pointe perceuse (102) avant pour transpercer au moins en partie la première partie de support (204) et la deuxième partie de support (206) ;
une tête de vis (104) arrière avec un entraînement (130) pour entraîner en rotation la vis (100) ;
un tronçon de tige (106) entre la pointe perceuse (102) et la tête de vis (104), avec un tronçon fileté (108) se raccordant directement ou indirectement sur la tête de vis (104), auto-taraudeur dans la première partie de support (204) et dans la deuxième partie de support (206) et avec un tronçon de rétrécissement (110) non fileté, se rétrécissant sur la face avant, se raccordant directement sur la pointe perceuse (102), le tronçon de rétrécissement (110) se raccordant directement sur le tronçon fileté (108) ;
le tronçon fileté (108) de la vis (100) étant configuré de telle sorte que lors du taraudage dans la première partie de support (204), la vis (100) soit poussée en avant par avance forcée dans la première partie de support (204) et dans la deuxième partie de support (206).

13. Utilisation selon la revendication 12, la première partie de support (204) étant une partie d'une pièce en bois et la deuxième partie de support (206) étant une partie d'une plaque de jonction métallique à l'aide de laquelle on fixe la pièce en bois sur un organe porteur (212) en utilisant la vis (100).
